(19) Europäisches Patentamt
European Patent Office
Office européen des brevets

(11) EP 1 297 948 A2

(12) **EUROPÄISCHE PATENTANMELDUNG**

(43) Veröffentlichungstag: **02.04.2003 Patentblatt 2003/14**

(51) Int Cl.[7]: **B32B 27/18**, C08J 5/18, C08K 5/00

(21) Anmeldenummer: **02021361.7**

(22) Anmeldetag: **24.09.2002**

(84) Benannte Vertragsstaaten:
**AT BE BG CH CY CZ DE DK EE ES FI FR GB GR IE IT LI LU MC NL PT SE SK TR**
Benannte Erstreckungsstaaten:
**AL LT LV MK RO SI**

(30) Priorität: **29.09.2001 DE 10148306**

(71) Anmelder: **Mitsubishi Polyester Film GmbH
65023 Wiesbaden (DE)**

(72) Erfinder:
- **Murschall, Ursula, Dr.
55283 Nierstein (DE)**
- **Kern, Ulrich, Dr.
55218 Ingelheim (DE)**
- **Crass, Günther, Dipl.-Ing.
65232 Taunusstein (DE)**

(74) Vertreter: **Plate, Jürgen, Dr. et al
Patentanwaltskanzlei Zounek,
Industriepark Kalle-Albert,
Gebäude H 391
Rheingaustrasse 190-196
65174 Wiesbaden (DE)**

(54) **Hydrolysebeständig ausgerüstete, transparente, amorphe Folie aus einem kristallisierbaren Thermoplasten und Verfahren zu ihrer Herstellung**

(57) Die Erfindung betrifft ein- oder mehrschichtige, transparente, amorphe Folie, die als Hauptbestandteil mindestens einen kristallisierbaren Thermoplasten, insbesondere einen Polyester, und daneben mindestens einen Hydrolysestabilisator enthalten. Der Hydrolysestabilisator ist bevorzugt eine phenolische Verbindung, ein Oxazolin und/oder ein monomeres oder polymeres Carbodiimid, gegebenenfalls kombiniert mit einem organischen Phosphit. Er wird bevorzugt in Form eines Masterbatches zugegeben. Bei Einwirkung von Feuchtigkeit und Wärme versprödet sie praktisch nicht und behält ihre Reißfestigkeit. Die Folie kann gegen UV-Strahlung stabilisiert, flammhemmend ausgerüstet, auf einer Seite oder auf beiden Seiten beschichtet, siegelfähig und/oder corona- bzw. flammbehandelt sein. Sie wird allgemein durch Extrusion oder Coextrusion hergestellt, wobei der Hydrolysestabilisator in Form eines vorgetrockneten oder vorkristallisierten Masterbatches zugegeben wird. Die Folie läßt sich besonders gut durch Tiefziehen verformen.

EP 1 297 948 A2

## Beschreibung

Die Erfindung betrifft eine ein- oder mehrschichtige, transparente, amorphe Folie, die als Hauptbestandteil mindestens einen kristallisierbaren Thermoplasten enthält. Sie betrifft ferner ein Verfahren zur Herstellung der Folie und ihre Verwendung.

Transparente amorphe wie auch teilkristalline Folien aus kristallisierbaren Thermoplasten, insbesondere aus kristallisierbaren Polyestern, sind bekannt und zahlreich beschrieben. Bekannt sind darüber hinaus funktionalisierte Folien dieser Art. Die Funktionalisierung kann durch das Einarbeiten von Additiven in die Folie erreicht werden. Die Additive erhöhen beispielsweise deren Flammschutz und/oder deren UV-Stabilität. Ebenso ist es möglich, die Folie zu beschichten oder ihre Oberfläche durch chemische Vorbehandlung, Coronaentladung oder Flammbehandlung zu modifizieren, beispielsweise um sie siegelfähig, bedruckbar, beschreibbar, antistatisch, metallisierbar oder sterilisierbar zu machen

In der EP-A 620 245 sind biaxial orientierte Polyesterfolien offenbart, die eine verbesserte thermische Stabilität zeigen. Sie enthalten Antioxidationsmittel, die in der Folie gebildete Radikale abfangen oder etwa gebildete Peroxide abbauen. Als Radikalfänger sind sterisch gehinderte Phenole, sekundäre aromatische Amine und sterisch gehinderte Amine offenbart, als Peroxid abbauende Mittel Verbindungen des dreiwertigen Phosphors, insbesondere Phosphonite oder Phosphite. Die UV-Stabilität der Folien ist jedoch allgemein unzureichend.

In der DE-A 198 23 991 sind amorphe (= nicht-kristalline), nicht verstreckte und nicht orientierte Platten mit einer Dicke von 0,1 bis 20 mm beschrieben, die als Hauptbestandteil ein bibenzolmodifiziertes Polyalkylenterephthalat und/oder ein bibenzolmodifiziertes Polyalkylennaphthalat enthalten. Die Platten zeichnen sich durch besonders gute Eigenschaften in einem breiten Temperaturbereich aus. Das bedeutet insbesondere, daß bei der Bestimmung der Schlagzähigkeit an nach Charpy (bestimmt gemäß ISO 179/1D) kein Bruch auftritt und daß die Izod-Schlagfestigkeit (ISO 180) bei - 40 °C vorzugsweise im Bereich von 10 bis 120 $kJ/m^2$ liegt. Hergestellt werden die Platten mit Hilfe von Glättkalandern, wobei der amorphe Zustand durch rasches Abkühlen der Polymere auf eine Temperatur unterhalb der Glas-Übergangstemperatur eingefroren wird.

In der EP-A 035 835 ist eine biaxial verstreckte und thermofixierte, mehrschichtige Polyesterfolie beschrieben, die eine Schicht aus einem hochkristallinen Polyester und, damit verbunden, eine siegelfähige Schicht aus einem im wesentlichen amorphen, linearen Polyester umfaßt. Die letztgenannte Schicht enthält feinverteilt Partikel, wobei der mittlere Durchmesser der Partikel größer ist als die Schichtdicke. Durch die Partikel werden Oberflächenvorsprünge gebildet, die das unerwünschte Blocken und Kleben an Walzen oder Führungen verhindern. Die Folie läßt sich dadurch besser aufwickeln und verarbeiten. Durch die Wahl von Partikeln mit größerem Durchmesser als die Siegelschicht und den in den Beispielen angegebenen Konzentrationen wird das Siegelverhalten der Folie verschlechtert. Die Siegelnahtfestigkeit der gesiegelten Folie bei 140 °C liegt in einem Bereich von 63 bis 120 N/m (0,97 N/15 mm bis 1,8 N/15 mm Folienbreite).

In der EP-A 432 886 ist eine coextrudierte Folie mit einer Polyester-Basisschicht, einer Deckschicht aus einem siegelfähigen Polyester und einer rückseitigen Polyacrylatbeschichtung beschrieben. Die siegelfähige Deckschicht kann aus einem Copolyester mit Einheiten aus Isophthalsäure und Terephthalsäure bestehen. Durch die rückseitige Beschichtung erhält die Folie ein verbessertes Verarbeitungsverhalten. Die Siegelnahtfestigkeit wird bei 140 °C gemessen. Für eine 11 µm dicke Siegelschicht wird eine Siegelnahtfestigkeit von 761,5 N/m (11,4 N/15 mm) angegeben. Nachteilig an der rückseitigen Acrylatbeschichtung ist, daß diese Seite gegen die siegelfähige Deckschicht nicht mehr siegelt. Die Folie ist damit nur sehr eingeschränkt zu verwenden.

Eine coextrudierte, mehrschichtige, siegelfähige Polyesterfolie ist ferner in der EP-A 515 096 beschrieben. Die siegelfähige Schicht enthält zusätzlich Pigmentierungspartikel, bevorzugt Kieselgelpartikel. Die Partikel können auch auf die bereits extrudierte Folie aufgebracht werden, beispielsweise durch Beschichten mit einer wäßrigen Kieselgel-Dispersion. Dadurch soll die Folie ihre guten Siegeleigenschaften beibehalten und gut zu verarbeiten sein. Die Rückseite enthält nur sehr wenige Partikel, die hauptsächlich über das Regranulat in diese Schicht gelangen. Die Siegelnahtfestigkeit wird bei 140 °C gemessen und beträgt mehr als 200 N/m (3 N/15 mm). Für eine 3 µm dicke Siegelschicht wird eine Siegelnahtfestigkeit von 275 N/m (4,125 N/15 mm) angegeben.

Die aus der WO 98/06575 bekannte coextrudierte, mehrschichtige Polyesterfolie umfaßt eine siegelfähige Deckschicht und eine nicht siegelfähige Basisschicht. Die Basisschicht kann dabei aus einer oder mehreren Schichten aufgebaut sein, wobei die innere Schicht mit der siegelfähigen Schicht in Kontakt steht. Die andere (äußere) Schicht bildet dann die zweite, nicht siegelfähige Deckschicht. Die siegelfähige Deckschicht kann auch hier aus Copolyestern mit Einheiten aus Isophthalsäure und Terephthalsäure bestehen. Die Deckschicht enthält jedoch keine Antiblockpartikel. Die Folie enthält außerdem noch mindestens einen UV-Absorber, der in der Basisschicht in einem Anteil von 0,1 bis 10 Gew.-% enthalten ist. Als UV-Absorber werden dabei Zinkoxid- oder Titandioxid-Partikel mit einem mittleren Durchmesser von weniger als 200 nm, vorzugsweise jedoch Triazine, z.B. ®Tinuvin 1577 der Fa. Ciba, verwendet. Die Basisschicht ist mit üblichen Antiblockmitteln ausgestattet. Die Folie zeichnet sich durch eine gute Siegelfähigkeit aus, hat jedoch nicht das gewünschte Verarbeitungsverhalten und weist zudem Defizite in den optischen Eigenschaften

auf.

Schichten aus Copolyester lassen sich auch durch Auftragen einer entsprechenden wäßrigen Dispersion erzeugen. So ist in der EP-A 144 978 eine Polyesterfolie beschrieben, die auf wenigstens einer Seite eine durchgehende Beschichtung aus dem Copolyester trägt. Die Dispersion wird auf die Folie vor dem Verstrecken bzw. vor dem letzten Verstreckschritt aufgebracht. Die Polyesterbeschichtung besteht aus einem Kondensationsprodukt von verschiedenen Monomeren, die zur Bildung von Polyestern befähigt sind, wie Isophthalsäure, aliphatische Dicarbonsäuren, Sulfomonomere und aliphatische oder cycloaliphatische Glykole.

In der DE-A 23 46 787 sind unter anderem schwer entflammbare Folien aus linearen Polyestern, die mit Carboxyphosphinsäuren modifiziert sind, offenbart. Die Herstellung dieser Folien ist jedoch mit einer Reihe von Problemen verbunden. So ist der Rohstoff sehr hydrolyseempfindlich und muß sehr gut vorgetrocknet werden. Beim Trocknen des Rohstoffes mit Trocknern, die dem Stand der Technik entsprechen, verklebt er, so daß nur unter schwierigsten Bedingungen eine Folie herstellbar ist. Die unter extremen, unwirtschaftlichen Bedingungen hergestellten Folien verspröden zudem bei zudem bei Temperaturbelastung. Die mechanischen Eigenschaften gehen dabei so stark zurück, daß die Folie unbrauchbarwird. Bereits nach 48 Stunden Temperaturbelastung tritt diese Versprödung auf.

Die genannten Folien sind jedoch allgemein nicht ausreichend beständig gegen die Einwirkung von wäßrigen Medien, so daß sie bzw. die daraus hergestellten Artikel sich nicht für Anwendungen eignen, bei denen sie mit Feuchtigkeit oder Wasser in Berührung kommen. In diesem Fall verschlechtern sich die mechanischen Eigenschaften so, daß die Folien völlig unbrauchbar werden können. Die meisten der bekannten Folie sind zudem verstreckt und dadurch teilkristallin.

Es bestand daher die Aufgabe, eine transparente, amorphe Folie bereitzustellen, die gute mechanische und optische Eigenschaften aufweist, keine Versprödung nach Temperaturbelastung zeigt, wirtschaftlich herstellbar und hydrolysebeständig ist. Als hydrolysebeständig gilt eine Folie, die im Klimatest (Feuchte-Langzeittest) nach 1.000 Stunden bei 60 °C und 95 % relativer Luftfeuchte eine Schlagzähigkeit von mehr als 100 $mJ/mm^2$ in Längs- und Querrichtung aufweist (bestimmt gemäß DIN 53448). Die Folie soll zudem problemlos thermoformbar sein. Das bedeutet, daß sich die Folie auf üblichen Tiefziehmaschinen ohne unwirtschaftliches Vortrocknen zu komplexen und großflächigen Formkörpern tiefziehen bzw. thermoformen läßt.

Gelöst wurde diese Aufgabe durch Einarbeiten mindestens eines Hydrolysestabilisators. Einbußen bei den optischen und mechanischen Eigenschaften der Folie treten überraschenderweise nicht auf.

Gegenstand der vorliegenden Erfindung ist demnach eine ein- oder mehrschichtige, transparente, amorphe Folie, die als Hauptbestandteil mindestens einen kristallisierbaren Thermoplasten enthält und dadurch gekennzeichnet ist, daß sie mindestens einen Hydrolysestabilisator enthält.

Als Hydrolysestabilisatoren wirksam sind zum einen Verbindungen, die die Hydrolyse von Esterbindungen unterdrücken oder verlangsamen. Das sind beispielsweise phenolische Stabilisatoren, insbesondere solche mit einem Molekulargewicht von mehr als 500. Dazu gehören sterisch gehinderte Phenole, Thiobisphenole, Alkylidenbisphenole, Alkylphenole, Hydroxybenzylverbindungen, Acylaminophenole und Hydroxyphenylpropionate (insbesondere (3,5-Di-*tert*.-butyl-4-hydroxy-phenyl)-propionsäureester des Pentaerythrits oder des 1-Octadecanols, erhältlich unter der Bezeichnung ®Irganox von Ciba Specialty Chemicals). Diese Verbindungen sind beispielsweise beschrieben in der Monographie 3Kunststoff-additive" von Gächter und Müller, 2. Aufl., Carl Hanser Verlag. Der Anteil der phenolischen Stabilisatoren beträgt allgemein 0,1 bis 5,0 Gew.-%, bevorzugt 0,2 bis 3,0 Gew.-%, jeweils bezogen auf das Gewicht der Folie bzw. der damit ausgerüsteten Schicht (im Fall der mehrschichtigen Folie).

Die genannten phenolischen Stabilisatoren werden vorzugsweise kombiniert mit organischen Phosphiten, insbesondere mit Triarylphosphiten (erhältlich beispielsweise unter der Bezeichnung ®Irgafos 168 von Ciba Specialty Chemicals). Diese sind in der Lage, Peroxide abzubauen und wirken damit als Sekundärstabilisatoren. Das Gewichtsverhältnis von phenolischen Stabilisatoren zu organischen Phosphiten beträgt dabei allgemein 10 : 90 bis 90 : 10. Mischungen von primären und sekundären Hydrolysestabilisatoren sind ebenfalls kommerziell erhältlich, beispielsweise unter den Bezeichnungen ®Irganox B 561 oder ®Irganox B 225.

Als Hydrolysestabilisatoren wirksam sind zum anderen Verbindungen, die bereits durch Hydrolyse gebrochene Bindungen wiederherstellen können. Um aus einer Hydroxy- und einer Carboxygruppe wieder eine Esterbindung herzustellen, eignen sich monomere oder polymere Carbodiimide, speziell Dicyclohexylcarbodiimid oder aromatische polymere Carbodiimide, wobei von den polymeren Carbodiimiden solche mit einem Molekulargewicht von 2.000 bis 50.000 und einem Schmelzbereich von 60 bis 210 °C (erhältlich beispielsweise unter den Bezeichnungen ®Stabaxol P von der Rhein Chemie GmbH, Mannheim, oder P17 von der Raschig GmbH, Ludwigshafen) besonders geeignet sind, daneben auch Oxazoline. Der Anteil dieser Verbindungen beträgt allgemein 0,1 bis 5,0 Gew.-%, bevorzugt 0,2 bis 3,0 Gew.-%, jeweils bezogen auf das Gewicht der einschichtigen Folie bzw. der damit ausgerüsteten Schicht der mehrschichtigen Folie.

Eine bevorzugte erfindungsgemäße Folie enthält sowohl Verbindungen, die die Hydrolysegeschwindigkeit herabsetzen, als auch Verbindungen, die Esterbindungen wiederherstellen können. Sie ist besonders resistent gegen Feuchtigkeit oder Wasser. In einer bevorzugten Ausführungsform enthält die Folie demgemäß 0,1 bis 5 Gew.-% an

polymeren aromatischen Carbodiimiden und 0,1 bis 5 Gew.-% eines Blends aus 30 bis 90 Gew.-% eines organischen Phosphits (insbesondere eines Triarylphosphits) und 70 bis 10 Gew.-% eines Hydroxyphenylpropionats.

Der Anteil aller Hydrolysestabilisatoren zusammen beträgt allgemein 0,2 bis 16,0 Gew.-%, bevorzugt 0,5 bis 14,0 Gew.-%, jeweils bezogen auf das Gewicht der Folie bzw. der betreffenden Schicht der mehrschichtigen Folie.

Anders als UV-Stabilisatoren zeigen die Hydrolysestabilisatoren bei einer Wellenlänge von 380 bis 400 nm praktisch keine oder nur eine vergleichsweise geringe Absorption.

Durch die Hydrolysestabilisatoren ist die erfindungsgemäße Folie sehr beständig gegen Feuchtigkeit. Das bedeutet, daß sie im Klimatest (Feuchte-Langzeittest) nach 1.000 Stunden bei 85 °C und 95% relativer Luftfeuchte eine Reißfestigkeit von mehr als 100 N/$mm^2$ in Längs- und Querrichtung aufweist.

Zu den guten optischen Eigenschaften der Folie zählen insbesondere eine hohe Lichttransmission L (bestimmt gemäß ASTM D 1003) von mehr als 80%, bevorzugt mehr als 82 %, und ein niedriger Gelbwert YID (bestimmt gemäß DIN 6167) von weniger als 15, bevorzugt weniger als 12, was angesichts der hohen Hydrolysestabilität überraschend gut ist.

Sie läßt sich auch wirtschaftlich herstellen. So können die Rohstoffe bzw. die Rohstoffkomponenten, die zur Herstellung der Folie benötigt werden, mit üblichen Industrietrocknern, wie Vakuumtrocknern, Wirbelschichttrocknern, Fließbetttrocknern oder Festbetttrocknern (Schachttrocknern), getrocknet werden ohne daß die Rohstoffe verkleben oder thermisch abgebaut werden.

Die Folie versprödet nicht bei Temperaturbelastung. Das bedeutet, daß sich die mechanischen Eigenschaften der Folie selbst nach 1.000 Stunden Tempern bei 60 °C in einem Umluftofen nur unwesentlich verschlechtern. Amorphe Polyethylenterephthalat-Folien ohne Hydrolysestabilisatoren erfüllen diese Anforderungen dagegen nicht.

Die erfindungsgemäße Folie enthält als Hauptbestandteil einen kristallisierbaren Thermoplasten, insbesondere einen kristallisierbaren Polyester oder Copolyester. Geeignete kristallisierbare bzw. teilkristalline (Co-)Polyester sind beispielsweise Polyethylenterephthalat (PET), Polyethylennaphthalat (PEN), Polybutylenterephthalat (PBT), bibenzolmodifiziertes Polyethylenterephthalat (PETBB), bibenzolmodifiziertes Polybutylenterephthalat (PBTBB) und bibenzolmodifiziertes Polyethylennaphthalat (PENBB) sowie Gemische davon, wobei Polyethylenterephthalat (PET) und bibenzolmodifiziertes Polyethylenterephthalat (PETBB) bevorzugt sind.

Im Rahmen der vorliegenden Erfindung sollen unter "kristallisierbaren Thermoplasten" kristallisierbare Homopolymere, kristallisierbare Copolymere, kristallisierbare Compounds, kristallisierbares Rezyklat oder andere Varianten von kristallisierbaren Thermoplasten verstanden werden.

Zur Herstellung von kristallisierbaren, thermoplastischen (Co-)Polyestern können neben den Hauptmonomeren, wie Dimethylterephthalat (DMT), Ethylenglykol (EG), Propylenglykol (PG), Butan-1,4-diol, Terephthalsäure (TA), Benzoldicarbonsäure und/ oder Naphthalin-2,6-dicarbonsäure (NDA), auch noch Isophthalsäure (IPA) und/oder *cis*- und/oder *trans*-1,4-Cyclohexan-dimethanol (*c*-CHDM, *t*-CHDM oder c/t-CHDM) verwendet werden.

Die Standardviskosität SV (DCE) des Polyethylenterephthalats liegt allgemein zwischen 800 und 1.400, vorzugsweise zwischen 900 und 1.300.

Bevorzugte Ausgangsmaterialien zur Herstellung der erfindungsgemäßen Folie sind kristallisierbare Thermoplaste mit einer Kristallitschmelztemperatur Tm von 180 bis 365 °C und mehr, vorzugsweise von 180 bis 310 °C, einem Kristallisationstemperaturbereich Tc zwischen 75 und 280 °C, einer Glasübergangstemperatur Tg von 65 bis 130 °C (bestimmt durch Differential Scanning Calorimetry (DSC) bei einer Aufheizgeschwindigkeit von 20 °C/min), mit einer Dichte von 1,10 bis 1,45 (bestimmt gemäß DIN 53479) und einer Kristallinität von 5 bis 65 %, bevorzugt von 20 bis 65 %.

Unter amorphen Folien sollen im Zusammenhang mit der vorliegenden Erfindung solche verstanden werden, die nicht kristallin sind, obwohl ein kristallisierbarer Thermoplast mit einer Kristallinität von 5 bis 65 %, bevorzugt von 20 bis 65 %, eingesetzt wird. Nicht kristallin (= amorph) bedeutet, daß der Kristallinitätsgrad weniger als 3 %, bevorzugt weniger als 1 %, beträgt. Eine derartige Folie ist allgemein nicht orientiert.

Folien mit einer besonders guten Thermoformbarkeit enthalten kristallisierbare Thermoplasten, die einen Anteil an Diethylenglykol-Einheiten von 1,0 bis 12 Gew.-%, bevorzugt 1,2 bis 11 Gew.-%, besonders bevorzugt 1,3 bis 10 Gew.-%, und/oder einen Anteil an Polyethylenglykol-Einheiten von 1,0 bis 12 Gew.-%, bevorzugt 1,2 bis 11 Gew.-%, besonders bevorzugt 1,3 Gew.-% bis 10 Gew.-%, und/oder einen Anteil an Isophthalsäure-Einheiten von 3,0 bis 10 Gew.-% aufweisen.

Das Schüttgewicht (bestimmt gemäß DIN 53466) liegt zwischen 0,75 und 1,0 kg/$dm^3$, bevorzugt zwischen 0,80 und 0,90 kg/$dm^3$.

Die Polydispersität (= Verhältnis Mw zu Mn) des Thermoplasten, gemessen durch Gelpermeationschromatographie (GPC), liegt vorzugsweise zwischen 1,5 und 4,0, besonders bevorzugt zwischen 2,0 und 3,5.

"Hauptbestandteil" heißt, daß der Anteil des mindestens einen teilkristallinen (kristallisierbaren) Thermoplasten bevorzugt zwischen 50 und 99 Gew.-%, besonders bevorzugt zwischen 75 und 95 Gew.-%, beträgt, jeweils bezogen auf das Gesamtgewicht der Folie bzw. das Gesamtgewicht der Schicht in der Folie. Die restlichen Anteile können neben dem Hydrolysestabilisator weitere, für biaxial orientierte, transparente Folien übliche Additive ausmachen.

Die erfindungsgemäße amorphe Folie hat allgemein eine Dicke von 30 bis 1.000 µm, bevorzugt von 50 bis 500 µm, besonders bevorzugt von 75 bis 300 µm. Sie kann sowohl ein- als auch mehrschichtig sein. In der mehrschichtigen Ausführungsform ist die Folie aus mindestes einer Kernschicht, mindestens einer Deckschicht und gegebenenfalls mindestens einer Zwischenschicht aufgebaut, wobei insbesondere ein dreischichtiger A-B-A oder A-B-C Aufbau bevorzugt ist. Für diese Ausführungsform ist es wesentlich, daß das Polyethylenterephthalat der Kernschicht eine ähnliche Standardviskosität besitzt wie das Polyethylenterephthalat der Deckschicht(en), die an die Kernschicht angrenzt (angrenzen).

In einer besonderen Ausführungsform können die Deckschichten und/oder die Zwischenschichten der mehrschichtigen Folie auch aus einem Polyethylennaphthalat-Homopolymeren oder aus Polyethylenterephthalat/Polyethylennaphthalat-Copolymeren oder einem Compound bestehen. In dieser Ausführungsform haben die Thermoplaste der Deckschichten ebenfalls ähnliche Standardviskositäten wie das Polyethylenterephthalat der Kernschicht.

In der mehrschichtigen Ausführungsform sind der oder die Hydrolysestabilisatoren vorzugsweise in der Basisschicht enthalten. Jedoch können nach Bedarf auch die Deckschichten und/oder eventuell vorhandene Zwischenschichten mit Hydrolysestabilisatoren in derfürdie Monofolie angegebenen Konzentration ausgerüstet sein. Anders als in der einschichtigen Ausführungsform bezieht sich hier die Konzentration der Stabilisatoren auf das Gewicht der ausgerüsteten Schicht.

Mit der erfindungsgemäßen Folie läßt sich mit einer weiteren, ein- oder mehrschichtigen Folie zu einer Verbundfolie kombinieren. Die weitere Folie ist beispielsweise eine Standard-PET-Folie oder eine Polyolefinfolie, insbesondere eine Polyethylen- oder Polypropylenfolie. Es können auch zwei erfindungsgemäße Folien kombiniert sein. Gegebenenfalls wird die erfindungsgemäße Folie vorher beschichtet, beispielsweise mit einem Ethylen/Vinylalkohol-Copolymer (EVOH), einem Polyvinylalkohol oder einem Polyvinylidendichlorid. Die weitere Folie kann wie die erfindungsgemäße Folie amorph, d.h. unorientiert sein. Sie kann auch eine Siegelschicht aufweisen. Ihre Dicke beträgt allgemein 30 bis 500 µm. Zwischen den einzelnen Folien kann gegebenenfalls eine Haftschicht angeordnet sein. Sie läßt sich erzeugen durch Auftragen einer entsprechenden Lösung oder Dispersion, die Wasser oder ein organisches Lösemittel enthalten kann. Um eine Haftschicht mit einem Schichtgewicht von 1 bis 10 g/$m^2$ herzustellen, beträgt der Anteil des Haftvermittlers zweckmäßig 5 bis 40 Gew.-%, bezogen auf das Gesamtgewicht der Beschichtungslösung. Besonders geeignete Haftvermittler sind Klebstoffe, die aus thermoplastischen Harzen bestehen, wie Cellulose-estern und -ethern, Alkyl- und Acrylestern, Polyamiden, Polyurethanen, Polyestern, hitzehärtbaren Harzen (insbesondere Epoxidharzen, Harnstoff/Formaldehyd-Harzen, Phenyl/Formaldehyd-Harzen oder Melamin/Formaldehyd-Harzen) oder synthetischen Kautschuken. Geeignete organische Lösemittel für die Beschichtungslösungen oder -dispersionen sind Kohlenwasserstoffe (wie Ligroin und Toluol), Ester (wie Ethylacetat) oder Ketone (wie Aceton oder Butanon).

Herstellen läßt sich die Verbundfolie durch Laminieren oder Kaschieren. Dabei werden die Folien üblicherweise durch Walzen hindurchgeleitet, die auf 30 bis 90 °C temperiert sind. Die weitere Folie kann auch durch In-line-Beschichtung unmittelbar auf der ersten Folie erzeugt werden (Schmelzextrusion auf eine bestehende Folie).

Die erfindungsgemäße Folie kann zusätzlich einen oder mehrere optische Aufheller enthalten. Der Anteil an Aufheller(n) beträgt allgemein 10 bis 50.000 ppm, bevorzugt 20 bis 30.000 ppm, besonders bevorzugt 50 bis 25.000 ppm, jeweils bezogen auf das Gewicht des kristallisierbaren Thermoplasten. Der optische Aufheller wird vorzugsweise in Form eines Masterbatches direkt bei der Folienherstellung zudosiert. Er ist in der Lage, UV-Strahlen im Wellenlängenbereich von 360 bis 380 nm zu absorbieren und als längerwelliges, sichtbares, blauviolettes Licht wieder abzugeben. Als Aufheller geeignet sind insbesondere Benzoxazol-Derivate, Triazine, Phenylcumarine und Bis-styrylphenole, erhältlich beispielsweise unter den Bezeichnungen ®Tinopal (Ciba Specialty Chemicals, Basel, Schweiz), ®Hostalux KS (Clariant GmbH, Deutschland) oder ®Eastobrite OB-1 (Eastman, USA).

Gegebenenfalls können neben dem optischen Aufheller auch noch im Thermoplasten lösliche blaue Farbstoffe zugesetzt sein. Geeignet dafür sind beispielsweise Ultramarinblau und Anthrachinonfarbstoffe, insbesondere Sudanblau 2 (BASF AG, Ludwigshafen, Deutschland). Der Anteil an blauem Farbstoff beträgt allgemein 10 bis 10.000 ppm, bevorzugt 20 bis 5.000 ppm, besonders bevorzugt 50 bis 1.000 ppm, jeweils bezogen auf das Gewicht des kristallisierbaren Thermoplasten.

Des weiteren ist die erfindungsgemäße Folie ohne Umweltbelastung rezyklierbar, wobei die aus dem Rezyklat hergestellte Folie praktisch keine Verschlechterung in den optischen Eigenschaften (insbesondere beim Gelbwert) oder den mechanischen Eigenschaften gegenüber einer aus neuen Ausgangsmaterialien hergestellten zeigt.

Basisschicht und/oder Deckschicht(en) können neben dem/den Hydrolysestabilisatoren und den bisher beschriebenen Additiven zusätzlich weitere übliche Additive, wie Füllstoffe und Antiblockmittel, enthalten. Beispiele für anorganische Blockmittel sind Siliciumdioxid, Aluminiumoxid, Titandioxid, Bariumsulfat, Calciumcarbonat und Kaolin. Die Antiblockmittel werden zweckmäßig dem Polymer bzw. der Polymermischung bereits vor dem Aufschmelzen zugesetzt.

Als Additive können auch Mischungen von zwei und mehr verschiedenen Antiblockmitteln oder Mischungen von Antiblockmitteln gleicher Zusammensetzung, aber unterschiedlicher Partikelgröße, gewählt werden. Die Partikel können den einzelnen Schichten in den üblichen Anteilen, z.B. als glykolische Dispersion, während der Polykondensation oder über Masterbatche bei der Extrusion zugegeben werden. Als besonders geeignet haben sich Pigmentanteile von 0,0001 bis 10,0 Gew.-%, bezogen auf das Gewicht der Deckschichten, erwiesen.

Für bestimmte Anwendungen kann es zweckmäßig sein, die Oberfläche der Folie durch Behandlung mit Säuren chemisch vorzubehandeln. Für diese sogenannte Ätzhaftvermittlung eignen sich insbesondere Trichloressigsäure, Dichloressigsäure oder Flußsäure, die für eine kurze Zeit (zwischen 5 und 120 Sekunden) auf die Oberfläche einwirken und dann wieder entfernt werden, beispielsweise mit einem sogenannten Luftmesser. Dadurch erhält die Folie eine sehr reaktive, amorphe Oberfläche.

Die erfindungsgemäße Folie kann eine oder mehrere weitere Funktionalitäten aufweisen. Die zusätzlich Funktionalität besteht vorzugsweise darin, daß die Folie gegen UV-Strahlung stabilisiert, flammhemmend ausgerüstet, auf einer oder auf beiden Seiten beschichtet, siegelfähig und/oder corona- oder flammbehandelt ist.

So kann die erfindungsgemäße Folie auf einer oder beiden Seiten beschichtet sein. Die Beschichtung hat dabei auf der fertigen Folie allgemein eine Dicke von 5 bis 100 nm, bevorzugt 20 bis 70 nm, insbesondere 30 bis 50 nm. Sie wird bevorzugt In-line aufgebracht, d.h. während des Folienherstellprozesses. Besonders bevorzugt ist die Aufbringung mittels des "Reverse gravure-roll coating"-Verfahrens, bei dem sich die Beschichtung äußerst homogen in der genannten Schichtdicke auftragen läßt. Die Beschichtungen werden als - bevorzugt wäßrige - Lösungen, Suspensionen oder Dispersionen aufgetragen, um der Folienoberfläche zusätzliche Funktionalitäten der eingangs genannten Art zu verleihen. Beispiele für Stoffe oder Zusammensetzungen, die zusätzliche Funktionalität verleihen, sind Acrylate (siehe WO 94/13476), Ethylvinylalkohole, PVDC, Wasserglas ($Na_2SiO_4$), hydrophile Polyester (5-Na-sulfoisophthalsäurehaltige PET/IPA-Polyester wie in den EP-A 144 878 oder US-A 4 252 885 genannt), Copolymere mit Vinylacetat-Einheiten (siehe WO 94/13481), Polyvinylacetate, Polyurethane, Alkali- oder Erdalkalisalze von ($C_{10}$-$C_{18}$) Fettsäuren, Copolymere mit Einheiten aus Butadien und Acrylnitril, Methylmethacrylat, Methacrylsäure und/oder Acrylsäure und/oder deren Ester. Die Stoffe oder Zusammensetzungen, die die zusätzliche Funktionalität verleihen, können die üblichen Additive, wie Antiblockmittel und/oder pH-Stabilisatoren, in Mengen von 0,05 bis 5 Gew.-%, vorzugsweise von 0,1 bis 3 Gew.-%, bezogen auf die Stoffe oder Zusammensetzungen, die die zusätzliche Funktionalität verleihen, enthalten.

Die genannten Stoffe oder Zusammensetzungen werden als verdünnte, vorzugsweise wäßrige Lösung, Emulsion oder Dispersion auf eine oder beide Seiten der Folie aufgebracht. Anschließend wird das Lösungsmittel entfernt.

Die Folie kann ein- oder beidseitig bedampft sein, insbesondere mit Ethylen/Vinylalkohol-Copolymeren, Polyvinylalkohol oder Polyvinylidendichlorid.

Die erfindungsgemäße Folie kann auch UV-stabil ausgerüstet sein. Licht, insbesondere der ultraviolette Anteil der Sonnenstrahlung, d. h. der Wellenlängenbereich von 280 bis 400 nm, induziert bei Thermoplasten Abbauvorgänge, als deren Folge sich nicht nur das visuelle Erscheinungsbild durch eintretende Farbänderung bzw. Vergilbung ändert, sondern durch die auch die mechanischphysikalischen Eigenschaften der Folien aus den Thermoplasten äußerst negativ beeinflußtwerden. Die Unterbindung dieser photooxidativen Abbauvorgänge ist von erheblicher technischer und wirtschaftlicher Bedeutung, da andernfalls die Anwendungsmöglichkeiten von zahlreichen Thermoplasten drastisch eingeschränkt sind. Polyethylenterephthalate beginnen beispielsweise schon unterhalb von 360 nm UV-Licht zu absorbieren, ihre Absorption nimmt unterhalb von 320 nm beachtlich zu und ist unterhalb von 300 nm sehr ausgeprägt. Die maximale Absorption liegt im Bereich zwischen 280 und 300 nm. In Gegenwart von Sauerstoff werden hauptsächlich Kettenspaltungen beobachtet, jedoch keine Vernetzungen. Kohlenmonoxid, Kohlendioxid und Carbonsäuren stellen die mengenmäßig überwiegenden Photooxidationsprodukte dar. Neben der direkten Photolyse der Estergruppen müssen noch Oxidationsreaktionen in Erwägung gezogen werden, die über Peroxidradikale ebenfalls die Bildung von Kohlendioxid zur Folge haben. Die Photooxidation von Polyethylenterephthalaten kann auch über Wasserstoffabspaltung in $\alpha$-Stellung der Estergruppen zu Hydroperoxiden und deren Zersetzungsprodukten sowie zu damit verbundenen Kettenspaltungen führen (H. Day, D. M. Wiles, *J. Appl. Polym. Sci.* **16** [1972] S. 203).

UV-Stabilisatoren, d.h. UV-Absorber als Lichtschutzmittel, sind chemische Verbindungen, die in die physikalischen und chemischen Prozesse des lichtinduzierten Abbaus eingreifen. Ruß und andere Pigmente können teilweise einen Lichtschutz bewirken. Diese Substanzen sind jedoch für transparente Folien ungeeignet, da sie zur Verfärbung oder Farbänderung führen. Geeignete UV-Stabilisatoren als Lichtschutzmittel sind UV-Stabilisatoren, die mindestens 70 %, bevorzugt mindestens 80 %, besonders bevorzugt mindestens 90 %, des UV-Lichts im Wellenlängenbereich von 180 nm bis 380 nm, vorzugsweise 280 bis 350 nm, absorbieren. Besonders geeignete UV-Stabilisatoren sind zudem im Temperaturbereich von 260 bis 300 °C thermisch stabil, d.h. sie zersetzen sich nicht in Spaltprodukte und gasen nicht aus. Geeignete UV-Stabilisatoren als Lichtschutzmittel sind beispielsweise 2-Hydroxy-benzophenone, 2-Hydroxy-benzotriazole, nickelorganische Verbindungen, Salicylsäureester, Zimtsäureester-Derivate, Resorcin-monobenzoate, Oxalsäure-anilide, Hydroxybenzoesäureester, Benzoxazinone, sterisch gehinderte Amine und Triazine, wobei die 2-Hydroxy-benzotriazole, die Benzoxazinone und die Triazine bevorzugt sind. Es war für die Fachwelt völlig überraschend, daß der Einsatz von UV-Stabilisatoren in Kombination mit Hydrolysestabilisatoren zu brauchbaren Folien mit hervorragenden Eigenschaften führt. Aus der Literatur sind UV-Stabilisatoren bekannt, die UV-Strahlung absorbieren und somit Schutz bieten. Der Fachmann hätte dann wohl einen dieser bekannten und handelsüblichen

UV-Stabilisatoren eingesetzt, dabei jedoch festgestellt, daß der UV-Stabilisator eine mangelnde thermische Stabilität hat und sich bei Temperaturen zwischen 200 und 240 °C zersetzt oder ausgast. Um die Folie nicht zu schädigen, hätte er große Mengen (ca. 10 bis 15 Gew.-%) an UV-Stabilisator einarbeiten müssen, damit dieser das UV-Licht wirklich wirksam absorbiert. Bei diesen hohen Konzentrationen vergilbt jedoch die Folie schon in kurzer Zeit nach der Herstellung. Auch die mechanischen Eigenschaften werden negativ beeinflußt. Daneben kann sich Stabilisator auf den Düsen bzw. Walzen ablagern, was zu Profilschwankungen bzw. zur Beeinträchtigung der optischen Eigenschaften (starke Trübung, Klebedefekt, inhomogene Oberfläche) führt.

In einer ganz besonders bevorzugten Ausführungsform enthält die erfindungsgemäße Folie als UV-Stabilisator 0,1 bis 5,0 Gew.-% 2-(4,6-Diphenyl-[1,3,5]triazin-2-yl)-5-hexyloxy-phenol der Formel

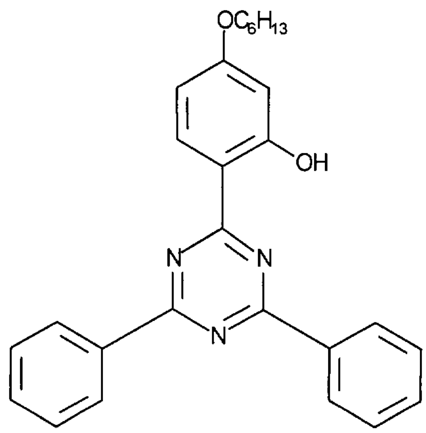

oder 0,1 bis 5,0 Gew.-% 2,2'-Methylen-bis-[6-benzotriazol-2-yl-4-(1,1,2,2-tetramethyl-propyl)-phenol] der Formel

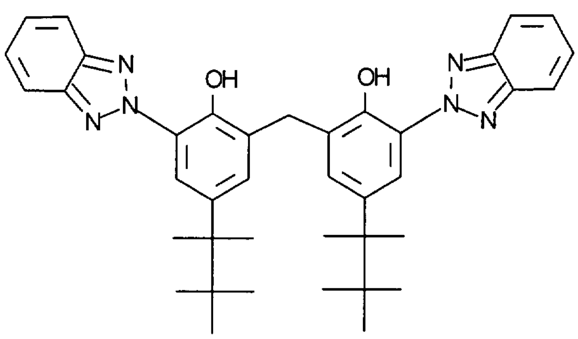

oder 0,1 bis 5,0 Gew.-% 2,2'-(1,4-Phenylen)-bis-([3,1]benzoxazin-4-on) der Formel

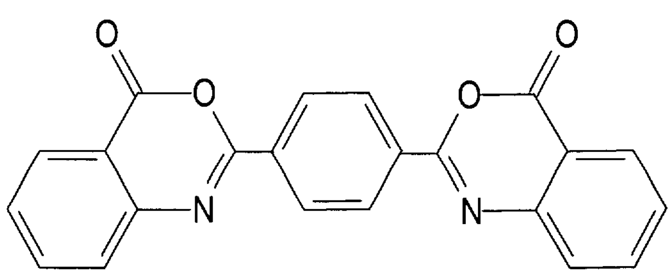

In einer weiteren Ausführungsform können auch Mischungen dieser UV-Stabilisatoren oder Mischungen von mindestens einem dieser UV-Stabilisatoren mit anderen UV-Stabilisatoren eingesetzt werden, wobei die Gesamtkonzentration an Lichtschutzmittel vorzugsweise zwischen 0,1 und 5,0 Gew.-%, besonders bevorzugt im Bereich von 0,5 bis 3,0 Gew.-%, liegt, bezogen auf das Gewicht der ausgerüsteten Schicht.

Überraschenderweise reicht bereits ein geringer Anteil der oben genannten UV-Stabilisatoren aus, um der erfindungsgemäßen Folie einen hervorragenden UV-Schutz zu verleihen. Die Folie gemäß der Erfindung besitzt eine exzellente Optik, ein ausgezeichnetes Profil und eine ausgezeichnete Planlage. Sie läßt sich damit verfahrenssicher und auch wirtschaftlich rentabel hergestellen. Des weiteren ist es sehr überraschend, daß auch das Regenerat wieder einsetzbar ist, ohne den Gelbwert der Folie negativ zu beeinflussen. Auch im Vergleich zu einer nicht ausgerüsteten Folie ist der Gelbwert im Rahmen der Meßgenauigkeit nicht negativ verändert.

In einerweiteren Ausführungsform ist die erfindungsgemäße Folie flammhemmend ausgerüstet. Flammhemmend bedeutet, daß die Folie in einer sogenannten Brandschutzprüfung die Bedingungen nach DIN 4102 Teil 2 und insbesondere die Bedingungen nach DIN 4102 Teil 1 erfüllt und in die Baustoffklasse B 2 und insbesondere B1 der schwer entflammbaren Stoffe eingeordnet werden kann. Des weiteren soll die gegebenenfalls flammhemmend ausgerüstete Folie den UL-Test 94 "Burning Test for Flammability of Plastic Material" bestehen, so daß sie in die Klasse 94 VTM-0 eingestuft werden kann. Die Folie enthält demgemäß ein Flammschutzmittel, das über die sogenannte Masterbatch-Technologie direkt bei der Folienherstellung zudosiert wird, wobei der Anteil des Flammschutzmittels im Bereich von 0,2 bis 30,0 Gew.-%, bevorzugt 0,5 bis 25 Gew.-%, besonders bevorzugt von 1,0 bis 20,0 Gew.-%, bezogen auf das Gewicht der Schicht des kristallisierbaren Thermoplasten, liegt. Im Masterbatch beträgt der Anteil des Flammschutzmittels allgemein 5 bis 60 Gew.-%, bevorzugt 10 bis 50 Gew.-%, jeweils bezogen auf das Gesamtgewicht des Masterbatches. Geeignete Flammschutzmittel sind beispielsweise Bromverbindungen, Chlorparaffine und andere Chlorverbindungen, Antimontrioxid und Aluminiumtrihydrate. Die Halogenverbindungen haben allerdings den Nachteil, daß dabei halogenhaltige Nebenprodukte entstehen können. Im Brandfall entstehen insbesondere Halogenwasserstoffe. Nachteilig ist auch die geringe Lichtbeständigkeit einer damit ausgerüsteten Folie. Weitere geeignete Flammschutzmittel sind beispielsweise organische Phosphorverbindungen wie Carboxyphosphinsäuren, deren Anhydride und Alkanphosphonsäureester, wobei die organische Phosphorverbindung bevorzugt in die PET-Kette einpolymerisiert ist. Wesentlich ist, daß die organische Phosphorverbindung im Thermoplast löslich ist, da andernfalls die geforderten optischen Eigenschaften nicht erfüllt werden.

Ganz überraschend haben Brandschutzversuche nach DIN 4102 und dem UL-Test gezeigt, daß es im Falle einer dreischichtigen Folie durchaus ausreichend ist, die 0,5 bis 2 $\mu$m dicken Deckschichten mit Flammschutzmitteln auszurüsten, um eine verbesserte Flammhemmung zu erreichen. Bei Bedarf und bei hohen Brandschutzanforderungen kann auch die Kernschicht mit Flammschutzmitteln ausgerüstet sein, d. h. eine sogenannte Grundausrüstung beinhalten.

Darüber hinaus ergaben Messungen, daß auch die flammfeste erfindungsgemäße Folie bei länger andauernder Temperaturbelastungen (1.000 Stunden bei 60 °C) nicht versprödet.

Wo eine sehr gute Siegelfähigkeit gefordert wird und wo diese Eigenschaft nicht über eine On-line Beschichtung erreicht werden kann, ist die erfindungsgemäße Folie zumindest dreischichtig aufgebaut und umfaßt dann in einer besonderen Ausführungsform die Basisschicht B, eine siegelfähige Deckschicht A und eine gegebenenfalls siegelfähige Deckschicht C. Ist die Deckschicht C ebenfalls siegelfähig, dann sind die beiden Deckschichten vorzugsweise identisch.

Die durch Coextrusion auf die Basisschicht B aufgebrachte siegelfähige Deckschicht A ist auf Basis von Polyestercopolymeren aufgebaut und besteht im wesentlichen aus Copolyestern, die überwiegend aus Isophthalsäure-, Bibenzolcarbonsäure- und Terephthalsäure-Einheiten und aus Ethylenglykol-Einheiten zusammengesetzt sind. Die restlichen Monomereinheiten stammen aus anderen aliphatischen, cycloaliphatischen oder aromatischen Diolen bzw. Dicarbonsäuren, wie sie auch in der Basisschicht vorkommen können. Die bevorzugten Copolyester, die die gewünschten Siegeleigenschaften bereitstellen, sind solche, die aus Etylenterephthalat- und Ethylenisophthalat-Einheiten und aus Ethylenglykol-Einheiten aufgebaut sind. Der Anteil an Ethylenterephthalat beträgt 40 bis 95 mol-% und der entsprechende Anteil an Ethylenisophthalat 60 bis 5 mol-%. Bevorzugt sind Copolyester, bei denen der Anteil an Ethylenterephthalat 50 bis 90 mol-% und der entsprechende Anteil an Ethylenisophthalat 50 bis 10 mol-% beträgt und ganz bevorzugt sind Copolyester, bei denen der Anteil an Ethylenterephthalat 60 bis 85 mol-% und der entsprechende Anteil an Ethylenisophthalat 40 bis 15 mol-% beträgt.

Für die gegebenenfalls siegelfähige Deckschicht C und für eventuelle Zwischenschichten können prinzipiell die gleichen Polymeren verwendet werden, die auch in der Basisschicht Verwendung finden.

Die gewünschten Siegel- und Verarbeitungseigenschaften dererfindungsgemäßen Folie werden aus der Kombination der Eigenschaften des verwendeten Copolyesters für die siegelfähige Deckschicht und den Topographien der siegelfähigen Deckschicht A und der gegebenenfalls siegelfähigen Deckschicht C erhalten.

Die Siegelanspringtemperatur von 110 °C und die Siegelnahtfestigkeit von mindestens 0,6 N/15mm wird erreicht, wenn für die siegelfähige Deckschicht A die oben näher beschriebenen Copolymere verwendet werden. Die besten Siegeleigenschaften der Folie erhält man, wenn dem Copolymeren keine weiteren Additive, insbesondere keine

anorganische oder organische Filler zugegeben werden. Für diesen Fall erhält man bei vorgegebenem Copolyester die niedrigste Siegelanspringtemperatur und die höchsten Siegelnahtfestigkeiten.

Allerdings ist in diesem Fall das Handling der Folie schlecht, da die Oberfläche der siegelfähigen Deckschicht A stark zum Verblocken neigt. Die Folie läßt sich kaum wickeln und ist für eine Weiterverarbeitung auf schnellaufenden Verpackungsmaschinen nicht geeignet. Zur Verbesserung des Handlings der Folie und der Verarbeitbarkeit ist es notwendig, die siegelfähige Deckschicht A zu modifizieren. Dies geschieht am besten mit Hilfe von geeigneten Antiblockmitteln einer ausgewählten Größe, die in einer bestimmten Konzentration der Siegelschicht zugegeben werden und zwar derart, daß einerseits das Verblocken minimiert und andererseits die Siegeleigenschaften nur unwesentlich verschlechtert werden.

Zwischen der Basisschicht und den Deckschicht/en kann sich gegebenenfalls noch eine Zwischenschicht befinden. Sie kann aus den für die Basisschicht beschriebenen Polymeren bestehen. In einer besonders bevorzugten Ausführungsform besteht sie aus dem für die Basisschicht verwendeten Polyester. Sie kann neben dem/den Hydrolysestabilisatoren auch weitere übliche Additive enthalten. Die Dicke der Zwischenschicht ist im allgemeinen größer als 0,3 µm und liegt vorzugsweise im Bereich von 0,5 bis 15 µm, insbesondere 1,0 bis 10 µm.

Die Dicke der Deckschicht/en ist im allgemeinen größer als 0,1 µm und liegt vorzugsweise im Bereich von 0,2 bis 5 µm, insbesondere 0,2 bis 4 µm, wobei die Deckschichten gleich oder verschieden dick sein können.

Die Gesamtdicke der erfindungsgemäßen Polyesterfolie kann innerhalb weiter Grenzen variieren und richtet sich nach dem beabsichtigten Verwendungszweck. Sie beträgt vorzugsweise 1 bis 500 µm, insbesondere 5 bis 350 µm, vorzugsweise 100 bis 300 µm, wobei die Basisschicht einen Anteil von vorzugsweise etwa 40 bis 90 % an der Gesamtdicke hat.

Zur Einstellung weiterer gewünschter Eigenschaften kann die Folie auch corona- bzw. flammbehandelt sein. Die Behandlung wird üblicherweise so durchgeführt, daß die Oberflächenspannung der Folie danach im allgemeinen über 45 mN/m liegt.

Gegenstand der vorliegenden Erfindung ist auch ein Verfahren zur Herstellung der Folie. Allgemein erfolgt die Herstellung durch ein Extrusions- oder Coextrusionsverfahren, beispielsweise auf einer Extrusionsstraße. Als besonders vorteilhaft hat es sich erwiesen, den mindestens einen Hydrolysestabilisator in Form eines vorgetrockneten oder vorkristallisierten Masterbatches vor der Extrusion oder Coextrusion zuzugeben. Der Anteil an Hydrolysestabilisator(en) im Masterbatch beträgt allgemein 5 bis 50 Gew.-%, bevorzugt 6 bis 30 Gew.-%, jeweils bezogen auf das Gesamtgewicht des Masterbatches. Der bzw. die Hydrolysestabilisator(en) werden in einem Trägermaterial dispergiert. Als Trägermaterial kommen der Thermoplast selbst, z. B. Polyethylenterephthalat oder auch andere Polymere, die mit dem Thermoplasten verträglich sind, in Frage.

Bevorzugt bei der Masterbatch-Technologie ist, daß die Korngröße und das Schüttgewicht der Masterbatche ähnlich der Korngröße und dem Schüttgewicht des Thermoplasten ist, so daß eine homogene Verteilung erreicht wird, aus der homogene Eigenschaften resultieren.

Die Polyesterfolien können nach bekannten Verfahren aus einem Polyesterrohstoff, gegebenenfalls weiteren Rohstoffen, mindestens einem Hydrolysestabilisator sowie gegebenenfalls weiteren üblichen Additiven (letztere in üblicher Menge von 0,1 bis 30 Gew.-%, bezogen auf das Gewicht der Folie) sowohl als Monofolie als auch als mehrschichtige - gegebenenfalls coextrudierte - Folien mit gleichen oder unterschiedlich ausgebildeten Oberflächen hergestellt werden, wobei eine Oberfläche beispielsweise Partikel enthält und die andere nicht oder alle Schichten Partikel enthalten. Ebenso können eine oder beide Oberflächen der Folie nach bekannten Verfahren mit einer funktionalen Beschichtung versehen werden.

Masterbatche, die den oder die Hydrolysestabilisator(en) enthalten, sollten vorkristallisiert oder vorgetrocknet sein. Das gleiche gilt für Masterbatche, die Flammschutzmittel oder UV-Stabilisator(en) enthalten. Diese Vortrocknung beinhaltet ein graduelles Erhitzen der Masterbatche unter reduziertem Druck (20 bis 80 mbar, vorzugsweise 30 bis 60 mbar, insbesondere 40 bis 50 mbar) sowie Rühren und gegebenenfalls ein Nachtrocknen bei konstanter, erhöhter Temperatur (ebenfalls unter reduziertem Druck). Die Masterbatche werden vorzugsweise bei Raumtemperatur aus einem Dosierbehälter in der gewünschten Abmischung zusammen mit den Polymeren der Basis- und/oder Deckschichten und ggf. anderen Rohstoffkomponenten chargenweise in einen Vakuumtrockner, der im Laufe der Trocken- bzw. Verweilzeit ein Temperaturspektrum von 10 bis 160°C, vorzugsweise 20 bis 150°C, insbesondere 30 bis 130°C durchläuft, gefüllt. Während der etwa 6-stündigen, vorzugsweise 5-stündigen, insbesondere 4-stündigen, Verweilzeit wird die Rohstoffmischung mit 10 bis 70 Upm, vorzugsweise 15 bis 65 Upm, insbesondere 20 bis 60 Upm, gerührt. Das so vorkristallisierte bzw. vorgetrocknete Rohstoffgemisch wird in einem nachgeschalteten ebenfalls evakuierten Behälter bei 90 bis 180 °C, vorzugsweise 100 bis 170°C, insbesondere 110 bis 160 °C, für 2 bis 8 Stunden, vorzugsweise 3 bis 7 Stunden, insbesondere 4 bis 6 Stunden, nachgetrocknet.

Die Polymere bzw. die Rohstoffgemische werden dann dem Extruder zugeführt, bei der Herstellung mehrschichtiger Folie entsprechend mehreren Extrudern. Etwa vorhandene Fremdkörper oder Verunreinigungen lassen sich aus der Polymerschmelze vor der Extrusion abfiltrieren. Die Schmelze(n) werden dann mit Hilfe einer Monodüse oder einer Mehrschichtdüse zu einem flachen Schmelzfilm bzw. zu mehreren, übereinander geschichteten flachen

Schmelzefilmen ausgeformt. Anschließend wird der ein- bzw. mehrschichtige Film auf einer Kühlwalze abgeschreckt und als weitgehend amorphe, d.h. unorientierte Folie verfestigt. Anschließend wird die Folie gesäumt und gewickelt.

Es war überraschend, daß durch die Masterbatch-Technologie, kombiniert mit einer geeigneten Vortrocknung und/oder Vorkristallisation, und dem Einsatz von Hydrolysestabilisatoren eine hydrolyse- und hochtemperaturstabile Folie mit dem geforderten Eigenschaftsprofil ohne technische Probleme (wie Verklebungen im Trockner) herstellbar ist.

Unerwartet war ferner, daß die erfindungsgemäße Folie auch in der flammfesten Ausführungsform den Klimatest besteht und nicht versprödet.

Bewitterungstests haben ergeben, daß die erfindungsgemäße Folie in der UV-stabilisierten Ausführungsform selbst nach etwa 5 bis 7 Jahren Einsatz im Außenbereich praktisch keine Vergilbung, Versprödung, keinen Glanzverlust und keine Rißbildung an der Oberfläche und auch keine Verschlechterung in den mechanischen Eigenschaften zeigt.

Durch die Kombination ihrer Eigenschaften eignen sich die erfindungsgemäßen Folien für eine Vielzahl verschiedenerAnwendungen, beispielsweise im Innen- und Außenbereich, auf dem Bausektor und im Messebau, im Laden- und Regalbau, im Elektronikbereich und auf dem Beleuchtungssektor, für Gewächshäuser, Innenraumverkleidungen, Messe- und Werbeartikel, als Displays, für Schilder, Lichtwerbeprofile, Schutzverglasungen von Maschinen und Fahrzeugen, Kaschiermedium, für Kredit- und Kundenkarten sowie im Kühl- und Tiefkühlbereich, als Verbundfolie, als Möbelfolie, insbesondere im Thermoformbereich und auf dem Automobilsektor.

Der Thermoformprozeß umfaßt in der Regel die Schritte Vortrocknen, Aufheizen, Formen, Abkühlen, Entformen und Tempern. Die erfindungsgemäßen Folie lassen sich in diesem Prozeß überraschenderweise sogar ohne Vortrocknen tiefziehen. So kann die Folie auch als Rollenware dem Thermoformprozeß zugeführt werden. Das ist ein wesentlicher, insbesondere ein ökonomischer Vorteil gegenüber tiefziehfähigen Polycarbonat- oder Polymethylmethacrylat-Folien. Je nach ihrer Dicke, benötigen diese Vortrocknungszeiten von 10 bis 15 Stunden bei Temperaturen von 100 bis 120 °C. Überraschend war auch die exakte Detailwiedergabe der mit der erfindungsgemäßen Folie erzeugten Formkörper.

Für das Thermoformen der erfindungsgemäßen Folie hat es sich als besonders zweckmäßig erwiesen, wenn die Form eine Temperatur von 100 bis 140 °C hat, die Aufheizzeit pro 10 µm Foliendicke weniger als 5 Sekunden beträgt und die Folientemperatur beim Formen im Bereich von 100 bis 160 °C liegt. Der Verstreckfaktor beträgt allgemein 1,5 bis 4,0, der Schrumpf (Schwindung) weniger als 1,5 %.

Entsprechend funktionalisierte erfindungsgemäße Folie eignen sich aufgrund ihrer guten UV-Stabilität, Flammfestigkeit und Kältefestigkeit auch für Anwendungen im Außenbereich, beispielsweise für Gewächshäuser, Überdachungen, Abdeckungen, Außenverkleidungen, Anwendungen im Bausektor, im Kühl- und im Tiefkühlbereich, für Lichtwerbeprofile sowie für Kredit-, Telefon- oder sonstige Kundenkarten.

Die Erfindung wird im Folgenden anhand von Ausführungsbeispielen näher erläutert, ohne darauf beschränkt zu sein. Die Folieneigenschaften wurden wie folgt geprüft:

**Klimatest (Feuchte-Langzeittest)**

In diesem Test wird die Folie 1.000 h bei 60 °C und 95% relativer Luftfeuchte im Autoklaven unter Normaldruck gelagert. Nach der Lagerung wird die Schlagzähigkeit in Längs- und Querrichtung gemäß DIN 53448 bestimmt. Sie muß mehr als 100 $mJ/mm^2$ betragen, um den Anforderungen gerecht zu werden.

**Temperaturfestigkeit**

Die Temperaturfestigkeit wird nach 1.000 h Tempern bei 60°C im Umlufttrockenschrank bestimmt. Nach dieser Temperung muß die Schlagzähigkeit nach DIN 53448 mehr als 100 $mJ/mm^2$ betragen, um die Anforderungen zu erfüllen.

**DEG-Gehalt/PEG-Gehalt/PA-Gehalt**

Der DEG-, PEG- bzw. PA-Gehalt wird gaschromatographisch nach Verseifen mit methanolischer KOH und Neutralisieren mit wäßriger Salzsäure bestimmt.

**Lichttransmission (Transparenz)**

Unter der Lichttransmission ist das Verhältnis des insgesamt durchgelassenen Lichtes zur einfallenden Lichtmenge zu verstehen. Die Lichttransmission wurde mit dem Messgerät ®HAZEGARD plus von Byk Gardener, Deutschland, gemäß ASTM D 1003 bestimmt.

**Gelbwert**

Der Gelbwert (YID) ist die Abweichung von der Farblosigkeit in Richtung "Gelb" und wurde gemäß DIN 6167 gemessen. Gelbwerte (YID) von weniger als 6 sind nicht bloßem Auge nicht erkennbar.

**Oberflächendefekte**

Die Oberflächendefekte wurden visuell bestimmt.

**Standardviskosität (SV) und intrinsische Viskosität (IV)**

Die Standardviskosität SV wurde - angelehnt an DIN 53726 - als 1%ige Lösung in Dichloressigsäure (DCE) bei 25°C gemessen. SV (DCE) = ($\eta_{rel}$-1) x 1000. Die intrinsische Viskosität (IV) berechnet sich wie folgt aus der Standardviskosität (SV)

$$IV = [\eta] = 6{,}907 \cdot 10^{-4}\ SV\ (DCE) + 0{,}063096\ [dl/g]$$

**Bewitterung (beidseitig), UV-Stabilität**

Die UV-Stabilität wurde nach der Testspezifikation ISO 4892 wie folgt geprüft:

| | |
|---|---|
| Testgerät | Atlas Ci 65 Weather Ometer |
| Testbedingungen | gemäß ISO 4892, d. h. künstliche Bewitterung |
| Bestrahlungszeit | 1000 Stunden (pro Seite) |
| Bestrahlung | 0,5 W/m$^2$, 340 nm |
| Temperatur | 63 °C |
| Relative Luftfeuchte | 50 % |
| Xenonlampe | innerer und äußerer Filter aus Borosilikat |
| Bestrahlungszyklen | 102 Minuten UV-Licht, dann 18 Minuten UV-Licht mit Wasserbesprühung der Proben dann wieder 102 Minuten UV-Licht usw. |

**Brandverhalten**

Das Brandverhalten wurde nach DIN 4102 Teil 2, Baustoffklasse B2 und nach DIN 4102 Teil 1, Baustoffklasse B1 sowie nach dem UL-Test 94 ermittelt.

**Bestimmung der Siegelanspringtemperatur (Mindestsiegeltemperatur)**

Mit dem Siegelgerät HSG/ET der Firma Brugger wurden heißgesiegelte Proben (Siegelnaht 20 mm x 100 mm) hergestellt, wobei die Folie bei unterschiedlichen Temperaturen mit Hilfe zweier beheizter Siegelbacken bei einem Siegeldruck von 2 bar und einer Siegeldauervon 0,5 s gesiegelt wurde. Aus den gesiegelten Proben wurden Prüfstreifen von 15 mm Breite geschnitten. Die T-Siegelnahffestigkeit wurde wie bei der Bestimmung der Siegelnahtfestigkeit gemessen. Die Siegelanspringtemperatur ist die Temperatur, bei der eine Siegelnahtfestigkeit von mindestens 0,5 N/15mm erreicht wird.

**Siegelnahtfestigkeit**

Zur Bestimmung der Siegelnahtfestigkeit wurden zwei 15 mm breite Folienstreifen übereinandergelegt und bei 130°C, einer Siegelzeit von 0,5 s und einem Siegeldruck von 2 bar (Gerät: Brugger Typ NDS, einseitig beheizte Siegelbacke) gesiegelt. Die Siegelnahtfestigkeit wurde nach der T-Peel-Methode bestimmt.

**Beispiele**

Bei den nachstehenden Beispielen und Vergleichsbeispielen handelt es sich jeweils um ein- oder mehrschichtige, transparente Folien unterschiedlicher Dicke, die auf einer Extrusionsstraße hergestellt wurden. Prozente sind Gewichtsprozente, soweit nicht anderes angeben.

Das Polyethylenterephthalat (Klarrohstoff), aus dem die transparenten Folien hergestellt wurden, hatte eine Standardviskosität SV (DCE) von 1110, was einer intrinsischen Viskosität IV (DCE) von 0,83 dl/g entspricht (Polyethylenterephthalat T94 V von KoSa, Deutschland).

Die Additive zur Erzielung des Hydrolyseschutzes und der zusätzlichen Funktionalitäten wurden in Form von verschiedenen Masterbatchen zudosiert:

*Masterbatch MB1:*

6 Gew.-% eines phenolischen Hydrolysestabilisators (®Irganox B561, ein Blend aus 80 Gew.-% Irgafos® 168 und 20 Gew.-% ®Irganox 1010; Ciba Specialty Chemicals, Basel, Schweiz),
94 Gew.-% Polyethylenterephthalat (im Folgenden PET genannt)
Schüttgewicht: 750 kg/$m^3$

*Masterbatch MB2*:

20 Gew.-% eines aromatischen polymeren Carbodiimids (®Stabaxol P von Rhein Chemie, Mannheim, Deutschland),
80 Gew.-% PET
Schüttgewicht: 750 kg/$m^3$

Zur Herstellung von UV-stabilisierten Folien wurde folgendes Masterbatch eingesetzt:

*Masterbatch MB3*:

20 Gew.-% 2-(4,6-Diphenyl-[1,3,5]triazin-2-yl)-5-hexyloxy-phenol (®Tinuvin 1577 von Ciba Specialty Chemicals) und
80 Gew.-% PET

Zur Verbesserung der Schlupfeigenschaften wurde folgendes Masterbatch eingesetzt:

*Masterbatch MB4*:

Es enthielt neben PET 10.000 ppm ®Sylobloc 44H (Fa. Grace, Deutschland).

Zur Herstellung einer flammhemmend ausgerüsteten Folie wurde folgendes Masterbatch eingesetzt:

*Masterbatch MB5*:

25 Gew.-% Methanphosphonsäure-bis-(5-ethyl-2-methyl-2-oxo-2$\lambda^5$-[1,3,2]dioxaphosphinan-5-ylmethylester) (®Amgard P1045 von Albright & Wilson Americas, USA) und
75 Gew.-% PET

<u>Beispiel 1:</u>

Es wurde eine 150 µm dicke, transparente, amorphe Monofolie hergestellt, die 51 % PET, 10 % MB2 (die Folie enthielt dementsprechend 2 % Hydrolysestabilisator) sowie 4 % MB4 als Antiblockmittel enthielt. Daneben enthielt

die Folie 35 % immanent anfallendes Regenerat.

Die Mischung aus den einzelnen Komponenten wurde bei Raumtemperatur aus separaten Dosierbehältern in einen Vakuumtrockner gefüllt, der vom Einfüllzeitpunkt bis zum Ende der Verweilzeit ein Temperaturspektrum von 25 bis 130 °C durchlief. Während der ca. 4-stündigen Verweilzeit wurde das Rohstoffgemisch mit 61 Umdrehungen pro Minute gerührt.

Das vorkristallisierte bzw. vorgetrocknete Rohstoffgemisch wurde in dem nachgeschalteten, ebenfalls unter Vakuum stehenden Hopper bei 140 °C 4 Stunden nachgetrocknet. Das Rohstoffgemisch wurde dann Extrudern zugeführt, wo es aufgeschmolzen und anschließend zu der beschriebenen Folie extrudiert wurde.

Beispiel 2:

Wie im Beispiel 1 beschrieben wurde eine 150 µm dicke Monofolie hergestellt. In Abänderung zu Beispiel 1 enthielt die Folie neben dem PET (T94 V), den 10 % MB2 und den 4 % MB4 zusätzlich noch 2 % MB1.

Beispiel 3:

Beispiel 1 wurde wiederholt mit der Abänderung, daß die Folie nunmehr beidseitig beschichtet wurde. Dazu wurde die Folie nach der Extrusion mit Hilfe eines "Reverse gravure-roll coating"-Verfahres mit einer wäßrigen Dispersion beidseitig beschichtet. Die Dispersion enthielt neben Wasser

- 4,2 % eines hydrophilisches Polyesters (5-Na-sulfoisophthalsäurehaltiges PET/ IPA-Polyester, SP41 von Ticona, USA),
- 0,15 % kolloidales Siliciumdioxid (®Nalco 1060 von Deutsche Nalco Chemie) und
- 0,15 % Ammoniumcarbonat als pH-Puffer.

Das Naßantragsgewicht betrug 1 g/m$^2$ pro Seite. Die berechnete Dicke der getrockneten Bechichtung betrug 80 nm.

Beispiel 4:

Durch Coextrusion wurde eine 150 µm dicke, hydrolysestabile und UV-stabile dreischichtige PET-Folie mit der Schichtabfolge A-B-A hergestellt, wobei B die Kernschicht und A die Deckschichten darstellt. Die Dicke der Kernschicht betrug 145 µm, die der beiden Deckschichten jeweils 2,5 µm.

Die Kernschicht wurde hergestellt aus einem Gemisch aus 52 % PET (T94 V), 10 % MB2, 3 % MB3 sowie 35 % immanent anfallendes Regenerat. Für die Deckschichten wurde ein Gemisch aus 93 % PET (T94 V) und 7 % MB4 eingesetzt.

Beispiel 5:

Durch Coextrusion wurde eine 400 µm dicke siegelfähige Folie mit der Schichtabfolge A-B-C hergestellt, wobei die Basisschicht B eine Dicke von 396 µm hatte, während die Deckschichten A und C jeweils eine Dicke von 2 µm aufwiesen.

Für die Basisschicht B wurde eine Mischung aus 55 % PET (T94 V), 10 % MB2 und 35 % immanent anfallendem Regenerat eingesetzt.

Für die siegelfähige Deckschicht A wurde als Thermoplast ein Copolyester aus 78 mol-% Ethylenterephthalat und 22 mol-% Ethylenisophthalat verwendet (hergestellt durch Umesterung in Gegenwart eines Mangan-Katalysators - Mn-Konzentration: 100 ppm). Neben dem Thermoplasten enthielt die Deckschicht 3 % MB4 als Antiblockmittel.

Für die nicht siegelfähige Deckschicht C wurde eine Mischung aus 93 % PET (T94V) und 7 % MB4 verwendet.

Beispiel 6:

Wie im Beispiel 5 beschrieben wurde eine 400 µm dicke, amorphe, hydrolysestabile, siegelfähige Folie mit der Schichtabfolge A-B-C hergestellt. Im Unterschied zu Beispiel 5 wurde die nicht siegelfähige Deckschicht C nach der Extrusion durch "Reverse gravure-roll coating" mit einer wäßrigen Dispersion der im Beispiel 3 genannten Zusammensetzung beschichtet. Das Naßantragsgewicht betrug 1 g/m$^2$. Die berechnete Dicke der getrockneten Beschichtung lag bei 80 nm.

Beispiel 7:

Wie im Beispiel 1 beschrieben wurde eine 150 µm dicke Monofolie hergestellt. Im Unterschied zu Beispiel 1 enthielt die Folie zusätzlich 3 % MB5.

Beispiel 8:

Wie im Beispiel 1 beschrieben wurde eine 150 µm dicke Monofolie hergestellt. Im Unterschied zu Beispiel 1 enthielt die Folie zusätzlich 3 % MB5 und 3 % MB3.

Beispiel 9:

Wie im Beispiel 4 beschrieben wurde eine 150 µm dicke, hydrolyse- und UV-stabile Folie mit der Schichtabfolge A-B-A hergestellt. Die Folie wurde dann einseitig corona-behandelt. Nach der Behandlung betrug die Oberflächenspannung der Folie 48 mN/m.

Vergleichsbeispiel 1:

Wie im Beispiel 7 beschrieben wurde eine 150 µm dicke Monofolie hergestellt, mit der einzigen Abweichung, daß die Folie keinen Hydrolysestabilisator enthielt.

Vergleichsbeispiel 2:

Vergleichsbeispiel 1 wurde wiederholt, wobei diesmal jedoch auch noch das Flammschutzmittel weggelassen wurde.
Die Eigenschaften der gemäß den Beispielen hergestellten Folien sind in der folgenden Tabelle zusammengestellt.

| | | B1 | B2 | B3 | B4 | B5 | B6 | B7 | B8 | B9 | VB1 | VB2 |
|---|---|---|---|---|---|---|---|---|---|---|---|---|
| **Lichttransmission/ Transparenz** | % | 93 | 94 | 93 | 96 | 95 | 95 | 93 | 92 | 97 | 93 | 94 |
| **Gelbzahl (YID)** | | 1,8 | 1,9 | 1,7 | 1,9 | 2,2 | 2,1 | 1,9 | 2 | 1,9 | 1,9 | 1,8 |
| **Klimatest bestanden?** | | ja | ja | ja | ja | ja | ja | ja | ja | ja | nein | nein |
| **temperaturbeständig?** | | ja | ja | ja | ja | ja | ja | ja | ja | ja | nein | nein |
| **UV-Stabilität (Absorption)** | nm | <380 | <380 | <380 | <290 | <380 | <380 | <380 | <290 | <290 | <380 | <380 |
| **Flammstabilität (Brandkl.)** | | | | | | | | B1, B2, UL | B1, B2, UL | | B1, B2, UL | |
| **Mindestsiegeltemperatur** | A/A* [°C] | | | | | 125 | 124 | | | | | |
| **Siegelnahtfestigkeit** | A/A* N/15mm | | | | | 0,8 | 0,9 | | | | | |
| **Oberflächenspannung** | mN/m | 40 | 40 | 40 | 40 | 40 | 40 | 40 | 40 | 48 | 40 | 40 |
| **Dicke** | µm | 150 | 150 | 150 | 150 | 400 | 400 | 150 | 150 | 150 | 150 | 150 |
| **Schichtabfolge** | | B | B | B | ABA | ABC | ABC | B | B | ABA | B | B |
| **Beschichtung (Haftung)** | | | | ++ | | | ++ | | | | | |

* beim Siegeln von Deckschicht A gegen Deckschicht A

++ verbesserte Haftvermittlung

## Patentansprüche

1. Ein- oder mehrschichtige, transparente, amorphe Folie, die als Hauptbestandteil mindestens einen kristallisierbaren Thermoplasten enthält, **dadurch gekennzeichnet, daß** sie mindestens einen Hydrolysestabilisator enthält.

2. Folie gemäß Anspruch 1, **dadurch gekennzeichnet, daß** der Hydrolysestabilisator eine phenolische Verbindung, bevorzugt ein sterisch gehindertes Phenol, Thio-bisphenol, Alkyliden-bisphenol, Alkylphenol, eine Hydroxybenzylverbindung, ein Acyl-amino-phenol und/oder ein Hydroxyphenylpropionat, ist.

3. Folie gemäß Anspruch 2, **dadurch gekennzeichnet, daß** der Anteil der phenolischen Verbindung 0,1 bis 8,0 Gew.-%, bevorzugt 0,2 bis 5,0 Gew.-%, jeweils bezogen auf das Gewicht der Folie bzw. der damit ausgerüsteten Schicht der mehrschichtigen Folie, beträgt.

4. Folie gemäß Anspruch 2 oder 3, **dadurch gekennzeichnet, daß** die phenolische Verbindung kombiniert ist mit mindestens einem organischen Phosphit, insbesondere mit einem Triarylphosphit.

5. Folie gemäß Anspruch 4, **dadurch gekennzeichnet, daß** das Gewichtsverhältnis der phenolischen Verbindung zu dem organischen Phosphit 10 : 90 bis 90 : 10 beträgt.

6. Folie gemäß Anspruch 1, **dadurch gekennzeichnet, daß** der Hydrolysestabilisator ein monomeres oder polymeres Carbodiimid und/oder ein Oxazolin ist.

7. Folie gemäß Anspruch 6, **dadurch gekennzeichnet, daß** das polymere Carbodiimid ein Molekulargewicht von 2.000 bis 50.000 hat.

8. Folie gemäß Anspruch 6 oder 7, daß der Anteil des monomeren oder polymeren Carbodiimids und/oder des Oxazolins 0,1 bis 5,0 Gew.-%, bevorzugt 0,2 bis 3,0 Gew.-%, jeweils bezogen auf das Gewicht der einschichtigen Folie bzw. der damit ausgerüsteten Schicht der mehrschichtigen Folie, beträgt.

9. Folie gemäß einem oder mehreren der Ansprüche 1 bis 8, **dadurch gekennzeichnet, daß** der Hydrolysestabilisator ein Gemisch aus 0,1 bis 5 Gew.-% an polymeren aromatischen Carbodiimiden und 0,1 bis 5 Gew.-% eines Blends aus 30 bis 90 Gew.-% eines organischen Phosphits und 70 bis 10 Gew.-% eines Hydroxyphenylpropionats ist.

10. Folie gemäß einem oder mehreren der Ansprüche 1 bis 9, **dadurch gekennzeichnet, daß** der Anteil aller Hydrolysestabilisatoren zusammen 0,2 bis 16,0 Gew.-%, bevorzugt 0,5 bis 14,0 Gew.-%, jeweils bezogen auf das Gewicht der Folie bzw. der betreffenden Schicht der mehrschichtigen Folie, beträgt.

11. Folie gemäß einem oder mehreren der Ansprüche 1 bis 10, **dadurch gekennzeichnet, daß** der kristallisierbare Thermoplast einen Anteil an Diethylenglykol-Einheiten von 1,0 bis 12 Gew.-%, bevorzugt 1,2 bis 11 Gew.- %, besonders bevorzugt 1,3 bis 10 Gew.-%, und/oder einen Anteil an Polyethylenglykol-Einheiten von 1,0 bis 12 Gew.-%, bevorzugt 1,2 bis 11 Gew.-%, besonders bevorzugt 1,3 Gew.-% bis 10 Gew.-%, und/oder einen Anteil an Isophthalsäure-Einheiten von 3,0 bis 10 Gew.-% aufweist.

12. Folie gemäß einem oder mehreren der Ansprüche 1 bis 11, **dadurch gekennzeichnet, daß** sie gegen UV-Strahlung stabilisiert, flammhemmend ausgerüstet, auf einer Seite oder auf beiden Seiten beschichtet, siegelfähig und/oder corona- bzw. flammbehandelt ist.

13. Folie gemäß Anspruch 12, **dadurch gekennzeichnet, daß** sie oder mindestens eine Schicht darin einen UV-Stabilisator enthält.

14. Folie gemäß Anspruch 13, **dadurch gekennzeichnet, daß** der UV-Stablilisator 2-(4,6-Diphenyl-[1,3,5]triazin-2-yl)-5-hexyloxy-phenol, 2,2'-Methylenbis-[6-benzotriazol-2-yl-4-(1,1,2,2-tetramethyl-propyl)-phenol] oder 2,2'-(1,4-Phenylen)-bis-[[3,1]benzoxazin-4-on] ist.

15. Folie gemäß Anspruch 13 oder 14, **dadurch gekennzeichnet, daß** der Anteil des UV-Stabilisators 0,1 bis 5,0 Gew.-%, bevorzugt 0,5 bis 3,0 Gew.-%, beträgt, jeweils bezogen auf das Gesamtgewicht der mindestens einen Schicht.

**16.** Folie gemäß einem oder mehreren der Ansprüche 12 bis 15, **dadurch gekennzeichnet, daß** sie oder mindestens eine Schicht darin ein Flammschutzmittel enthält.

**17.** Folie gemäß Anspruch 16, **dadurch gekennzeichnet, daß** das Flammschutzmittel eine Bromverbindung, ein Chlorparaffin oder eine andere Chlorverbindung, Antimontrioxid, Aluminiumhydroxid oder eine organische Phosphorverbindung ist.

**18.** Folie gemäß Anspruch 16 oder 17, **dadurch gekennzeichnet, daß** der Anteil des Flammschutzmittels 0,5 bis 30,0 Gew.-%, bevorzugt 1,0 bis 20,0 Gew.-%, jeweils bezogen auf das Gewicht der Schicht des kristallisierbaren Thermoplasten, beträgt.

**19.** Folie gemäß einem oder mehreren der Ansprüche 12 bis 18, **dadurch gekennzeichnet, daß** sie zusätzlich eine siegelfähige Deckschicht umfaßt.

**20.** Folie gemäß einem oder mehreren der Ansprüche 1 bis 19, **dadurch gekennzeichnet, daß** sie mit mindestens einer weiteren, ein- oder mehrschichtigen Folie zu einer Verbundfolie kombiniert ist.

**21.** Verfahren zur Herstellung der Folie gemäß einem oder mehreren der Ansprüche 1 bis 20, **dadurch gekennzeichnet, daß** ein Gemisch, das mindestens einen kristallisierbaren Thermoplast als Hauptbestandteil und mindestens einen Hydrolysestabilisator umfaßt, in einem Extruder aufgeschmolzen und durch Extrusion oder Coextrusion zu einer ein- oder mehrschichtigen Folie geformt wird, wobei mindestens ein Hydrolysestabilisator in Form eines vorkristallisierten oder vorgetrockneten Masterbatches vor der Extrusion oder Coextrusion zugegeben wird.

**22.** Verfahren gemäß Anspruch 21, **dadurch gekennzeichnet, daß** die durch Extrusion oder Coextrusion erzeugte Folie mit Hilfe einer Kühlwalze abgeschreckt wird.

**23.** Verwendung der Folie gemäß einem oder mehreren der Ansprüche 1 bis 20 im Innen- und Außenbereich, auf dem Bausektor und im Messebau, im Laden- und Regalbau, im Elektronikbereich und auf dem Beleuchtungssektor, für Gewächshäuser, Innenraumverkleidungen, Messe- und Werbeartikel, als Displays, für Schilder, Lichtwerbeprofile, Schutzverglasungen von Maschinen und Fahrzeugen, Kaschiermedium, für Kredit- und Kundenkarten sowie im Kühl- und Tiefkühlbereich, als Verbundfolie, als Möbelfolie, insbesondere im Thermoformbereich und auf dem Automobilsektor.